# EUROPEAN PATENT APPLICATION

(11) **EP 4 593 133 A1**
(43) Date of publication of application: **30.07.2025**
(21) Application number: 24155693.5
(22) Date of filing: 05.02.2024
(51) Int. Cl.: H01M 10/04, H01M 10/0585

(54) **METHOD AND DEVICE FOR STACKING CELL POLE PIECES**

(30) Priority: 25.01.2024 JP 2024009205
(71) Applicant: Shenzhen GDlaser Technology Co.,Ltd., Shenzhen, Guangdong (CN)
(72) Inventor: He, Lin, Shenzhen, Guangdong (CN)
(74) Representative: Petraz, Gilberto Luigi

(57) **Abstract**

The present application discloses a method and device for stacking cell pole pieces. The first mechanical hand simultaneously grabs corrected m×n first pole pieces from the first position correction platform, and simultaneously places the m×n first pole pieces on a separator of the same lamination table in m rows and n columns for lamination, and the second mechanical hand simultaneously grabs corrected m×n second pole pieces from the second position correction platform and simultaneously places m×n second pole pieces on a separator on the same lamination table in m rows and n columns for lamination. By simultaneously laminating m×n pole pieces on the same lamination table in an arrangement of m rows and n columns, multiple pole pieces can be stacked at one time, so as to improve the lamination efficiency.

## Description

### Technical Field

The present application relates to the technical field of lithium batteries, and in particular, to a method and device for stacking cell pole pieces.

### Background Art

In the related art, a cell is a core component of a battery, and a cell of a lithium battery is formed by stacking multiple layers of pole pieces and separators between the pole pieces. The existing lamination machines generally perform lamination in a layer-by-layer manner or in a manner of firstly attaching a part of the pole pieces and then inserting the remaining pole pieces during lamination. The lamination principle of layer-by-layer lamination is to use a lamination machine to bend a continuous separator in a Z shape, and implant the positive pole piece and the negative pole piece at intervals in separator interlayers to form a lamination. The existing process of firstly attaching a part of the pole pieces and then inserting the remaining pole pieces during lamination typically involves firstly attaching the positive pole piece to the separator and then inserting the negative pole piece into separator interlayers during the folding of the separator to form a lamination. However, both of the two manners are slow in lamination speed, low in lamination efficiency, and difficult to meet high-efficiency production requirements.

### Summary of the Invention

The embodiments of the present application provide a method and device for stacking cell pole pieces, aiming to solve the problem of low lamination speed and low lamination efficiency of the existing lamination machines.

The present application provides a method for stacking cell pole pieces, the method including:
a first mechanical hand simultaneously grabbing m×n first pole pieces from a first transportation assembly and placing the m×n first pole pieces on a first position correction platform for position correction, and a second mechanical hand simultaneously grabbing m×n second pole pieces from a second transportation assembly and placing the m×n second pole pieces on a second position correction platform for position correction, wherein m is a positive integer greater than or equal to 1, and n is a positive integer greater than or equal to 2;
a separator assembly covering a first-layer separator on a lamination table;
the first mechanical hand simultaneously grabbing the corrected m×n first pole pieces from the first position correction platform, and simultaneously placing the m×n first pole pieces on the first-layer separator on the same lamination table in m rows and n columns;
the separator assembly covering a second-layer separator on the m×n first pole pieces;
the second mechanical hand simultaneously grabbing the corrected m×n second pole pieces from a second position correction platform, and simultaneously placing the m×n second pole pieces on a second-layer separator on the same lamination table in m rows and n columns, so as to complete one lamination of the first pole pieces and the second pole pieces; and
repeating the step of laminating the first pole pieces and the second pole pieces until a preset stopping condition is met to obtain a lamination unit.

The present application further provides a device for stacking cell pole pieces, applied to the above-mentioned method. The device includes: a first transportation assembly for transporting a first pole piece and a second transportation assembly for transporting a second pole piece, a first correction platform for correcting a position of the first pole piece, a second correction platform for correcting a position of the second pole piece, a lamination table, a first mechanical hand, a second mechanical hand, and a separator assembly for separator covering, wherein the first correction platform and the second correction platform are respectively provided on two sides of the lamination table, the first transportation assembly is provided on a side of the first correction platform away from the lamination table, and the second transportation assembly is provided on a side of the second correction platform away from the lamination table; and the first mechanical hand is used for simultaneously grabbing and placing multiple first pole pieces and reciprocating among the first transportation assembly, the first correction platform, and the lamination table to transfer the first pole pieces, and the second mechanical hand is used for simultaneously grabbing and placing multiple second pole pieces and reciprocating among the second transportation assembly, the second correction platform, and the lamination table to transfer the second pole pieces.

In the present application, the lamination unit is finally obtained by repeatedly covering the lamination table by the separator assembly while the first mechanical hand and the second mechanical hand alternately stack the first pole pieces and the second pole pieces, and multiple pole pieces can be stacked at one time by simultaneously laminating m×n pole pieces on the same lamination table in an arrangement of m rows and n columns, thereby greatly improving the lamination speed and lamination efficiency.

### Brief Description of the Drawings

In order to illustrate the technical solutions in the embodiments of the present application more clearly, the following will briefly introduce the drawings that need to be used in the description of the embodiments. Obviously, the drawings in the following description are some embodiments of the present application. For those of ordinary skills in the art, other drawings can be obtained according to these drawings without involving inventive efforts.
Fig. 1 is a schematic diagram of the stacking of a device for stacking cell pole pieces in an embodiment of the present application;
Fig. 2 is a schematic diagram of the stacking of a device for stacking cell pole pieces in another embodiment of the present application;
Fig. 3 is a schematic three-dimensional diagram of a first mechanical hand and a second mechanical hand of a device for stacking cell pole pieces in an embodiment of the present application;
Fig. 4 is a schematic diagram of the top view of a first mechanical hand and a second mechanical hand of a device for stacking cell pole pieces in an embodiment of the present application;
Fig. 5 is a schematic diagram of the side view of a first mechanical hand and a second mechanical hand of a device for stacking cell pole pieces in an embodiment of the present application;
Fig. 6 is an enlarged view of Part A in Fig. 3;
Fig. 7 is an enlarged view of Part B in Fig. 3;
Fig. 8 is a schematic flowchart of the steps of a method for stacking cell pole pieces in an embodiment of the present application; and
Fig. 9 is a schematic flowchart of the steps of a method for stacking cell pole pieces in another embodiment of the present application.

### Detailed Description of the Invention

With reference to Figs. 1 to 7, Figs. 1 and 2 are schematic diagrams of the stacking of a device for stacking cell pole pieces provided in an embodiment of the present application. The device for stacking cell pole pieces includes: a first transportation assembly 11 for transporting a first pole piece 101 and a second transportation assembly 12 for transporting a second pole piece 102, a first correction platform 21 for correcting a position of the first pole piece 101, a second correction platform 22 for correcting a position of the second pole piece 102, a lamination table 3, a first mechanical hand, a second mechanical hand, and a separator assembly 4 for separator covering. The first correction platform 21 and the second correction platform 22 are respectively provided on two sides of the lamination table 3, the first transportation assembly 11 is provided on a side of the first correction platform 21 away from the lamination table 3, and the second transportation assembly 12 is provided on a side of the second correction platform 22 away from the lamination table 3; and the first mechanical hand is configured to simultaneously grab and place multiple the first pole pieces 101 and reciprocate among the first transportation assembly 11, the first correction platform 21, and the lamination table 3 to transfer the first pole pieces 101, and the second mechanical hand is configured to simultaneously grab and place multiple the second pole pieces 102 and reciprocate between the second transportation assembly 12, the second correction platform 22, and the lamination table 3 to transfer the second pole pieces 102.

Specifically, the lamination table 3 is a platform for stacking pole pieces, the lamination table 3 being arranged in a central position. The separator assembly 4 is arranged above the lamination table 3, the separator assembly 4 including a separator 41 unwinding mechanism and a separator covering device for introducing the separator 41 into the lamination table 3. The separator covering device is used for folding the separator 41 in a Z shape, and the separator 41 is a continuously separator. The first correction platform 21 and the second correction platform 22 are respectively provided on the left side and right side of the lamination table 3. For example, the first correction platform 21 is on the left side of the lamination table 3, the second correction platform 22 is on the right side of the lamination table 3, the first transportation assembly 11 is provided on the left side of the first correction platform 21, and the second transportation assembly 12 is on the right side of the second correction platform 22. The first pole piece 101 passes sequentially from left to right through the first transportation assembly 11 and the first correction platform 21 onto the lamination table 3. The second pole piece 102 passes sequentially from right to left through the second transportation assembly 12 and the second correction platform 22 onto the lamination table 3. The first pole piece 101 is carried by the first mechanical hand, and the second pole piece 102 is carried by the second mechanical hand, the first mechanical hand being reciprocally movable among the first transportation assembly 11, the first correction platform 21 and the lamination table 3, and the second mechanical hand being reciprocally movable among the second transportation assembly 12, the second correction platform 22 and the lamination table 3. The first mechanical hand may simultaneously grab and place multiple first pole pieces 101 and the second mechanical hand may simultaneously grab and place multiple second pole pieces 102. The configurations of the first mechanical hand and the second mechanical hand are various, and not limited as long as the first mechanical hand and the second mechanical hand can simultaneously grab and place multiple pole pieces. On the same lamination table 3, the separator assembly 4 folds the separator 41 into a Z shape, and at the same time, multiple first pole pieces 101 and multiple second pole pieces 102 are alternately placed among the folded separator 41 by using the first mechanical hand and the second mechanical hand respectively, and the first pole pieces 101 and the plurality of second pole pieces 102 are separated by the separator 41. The above-mentioned process is repeated multiple times, and finally a lithium battery cell having a certain thickness is formed. It needs to be noted that the first pole piece 101 may be either a positive pole piece or a negative pole piece, and the second pole piece 102 may be either a positive pole piece or a negative pole piece. When the first pole piece 101 is a positive pole piece, the second pole piece 102 is a negative pole piece; and when the first pole piece 101 is a negative pole piece, the second pole piece 102 is a positive pole piece.

With the present embodiment, since the first mechanical hand and the second mechanical hand can simultaneously grab and place multiple pole pieces, when lamination is performed, the first mechanical hand is used to simultaneously stack multiple first pole pieces 101 on the same lamination table 3, and the second mechanical hand is used to simultaneously stack multiple second pole pieces 102 on the same lamination table 3 such that multiple pole pieces can be stacked at one time. With respect to the conventional mechanical hand which can only place one pole piece at a time on the lamination table 3, the present embodiment achieves the scenario that multiple pole pieces are placed on the lamination table 3 at one time and multiple pole pieces are laminated simultaneously, thereby greatly improving the lamination speed and lamination efficiency.

In one embodiment, a first CCD visual device is provided above the first correction platform 21 and a second CCD visual device is provided above the second correction platform 22.

Specifically, the present embodiment employs a technique of visual inspection to perform position correction on the first pole piece 101 and the second pole piece 102. Visual inspection refers to converting a taken-in object to an image signal through a machine vision product (namely, an image taking-in device, such as CMOS and CCD), sending the same to a dedicated image processing system, and converting the same into a digitized signal according to pixel distribution, brightness, color and other information. The image system performs various operations on these signals to extract features of the target, and then controls the on-site equipment to act according to the discriminant results. This embodiment specifically employs a CCD visual device. Specifically, a first CCD visual device is provided above the first correction platform 21 and a second CCD visual device is provided above a second correction platform 22. The CCD visual device is realized based on a CCD image sensor. The CCD sensor converts light into electric charge and converts it into a digital signal to form a digital image. A CCD sensor can collect images at high speed and has high sensitivity and resolution. The acquired digital image is processed by an image processing algorithm, including denoising, filtering, enhancing, etc. so as to optimize the image quality and make the image more suitable for subsequent analysis and detection; after image processing, the CCD visual device will extract specific features and information in the image, such as color, shape, size, etc. according to the required detection tasks; and the CCD visual device uses the feature information to detect and determine whether a target meets a predetermined criterion, including, for example, the tasks of defect detection, product quality assessment, object positioning, etc. For this embodiment, the CCD visual device primarily performs the object positioning task, i.e. the positions of the first electrode piece and the second electrode piece are positioned. After the positions of the first electrode piece and the second electrode piece are positioned by the first CCD visual device and the second CCD visual device, position correction is performed by the first correction platform 21 and the second correction platform 22 if there is a position offset.

In the present embodiment, the first correction platform 21 and the second correction platform 22 are both UVW platforms. The UVW platform is a precision optical alignment instrument mainly used for three-dimensional positioning and measurement of micro-objects, and is composed of three mutually perpendicular platforms, respectively called U, V, and W platforms, and three adjustable illumination systems and three movable measurement heads are respectively mounted on these platforms. Through small adjustments to these platforms and illumination systems, high-precision three-dimensional positioning and measurement of micro-objects can be achieved. The working principle of the UVW platform is based on the three-point method, i.e. the positional relationship of three measurement points is used to determine the three-dimensional coordinates of the object to be measured. When the UVW platform is used for measurement, firstly, it is necessary to put the object to be measured on the U-platform, and then the U-platform is rotated and flipped, so that the measurement probe below the U-platform corresponds to the first measurement point of the object to be measured; then, the V platform and the W platform are respectively adjusted so that the measurement probes below them respectively correspond to the second measurement point and the third measurement point of the object to be measured; during the adjustment, it is necessary to keep the distance and angle between three measurement probes constant; and once the three measurement probes correspond to the three measurement points respectively, the three-dimensional coordinates of the object to be measured can be determined by calculating the distance and angle between these measurement points.

In particular implementations, the number of UVW platforms is the same as the number of pole pieces and the arrangement of the UVW platforms is the same as the arrangement of the pole pieces. For example, if the number of the first pole piece 101 is 5 pieces, 5 UVW platforms are correspondingly provided, and if the number of the second pole piece 102 is 5 pieces, 5 UVW platforms are correspondingly provided. That is to say, each pole piece is configured with one position correction platform; five pole pieces are arranged in parallel and spaced apart, and then five UVW platforms are also arranged in parallel and spaced apart; and the 10 pole pieces are arranged in two rows and five columns, as are the 10 UVW platforms. The UVW platform cooperates with the CCD visual device for correction. Firstly, the position of each pole piece is positioned by the CCD visual device, and it is judged whether the pole piece is in the correct position. If the position is offset, then the position of the offset pole piece is corrected separately by the UVW platform corresponding to the offset pole piece. By the above-described arrangement of the UVW platform and positional correction of the pole pieces, it is possible to place the pole pieces in a laterally and longitudinally spaced arrangement with a fixed gap between the pole pieces.

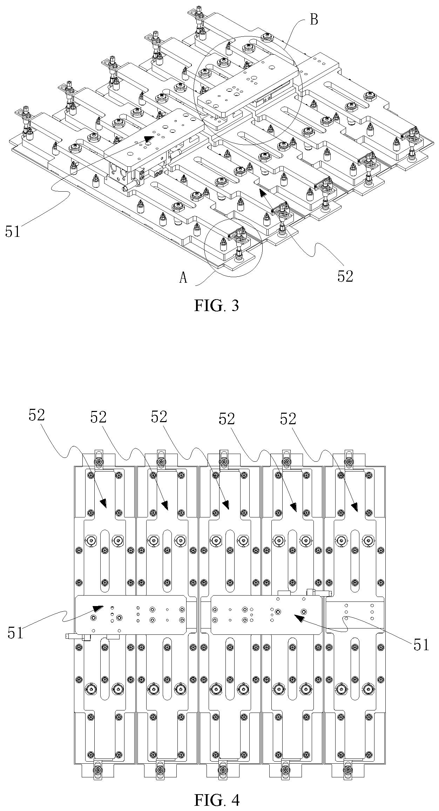

Referring to Fig. 3, in one embodiment, the first mechanical hand and the second mechanical hand each include a bracket 51 and n adsorption units 52 connected to the bracket 51, wherein the n adsorption units 52 are laterally arranged in parallel and spaced apart, n being a positive integer greater than or equal to 2. Specifically, the first mechanical hand and the second mechanical hand of the present embodiment have the same structure, and both include a bracket 51 and an adsorption unit 52. The bracket 51 on the one hand serves to connect a moving platform and on the other hand to support and connect multiple adsorption units 52. The adsorption unit 52 can generate a vacuum adsorption force to adsorb the pole pieces, the number of the adsorption unit 52 is the same as the number of the pole pieces, and the arrangement of the adsorption unit 52 is the same as the arrangement of the pole pieces. In the present embodiment, the adsorption units 52 are arranged in a laterally spaced manner, and multiple adsorption units 52 are arranged in a laterally spaced manner, wherein the number of adsorption units 52 is n, and n is a positive integer greater than or equal to 2. For example, five adsorption units 52 are arranged in a laterally spaced manner. In this embodiment, multiple pole pieces on the correction platform are also placed in a laterally spaced arrangement. In this manner, by arranging multiple adsorption units 52 laterally in parallel and spaced apart, the mechanical hand can simultaneously absorb multiple pole pieces laterally in parallel and spaced apart, thereby facilitating the simultaneous lateral in parallel and spaced apart placement of multiple pole pieces.

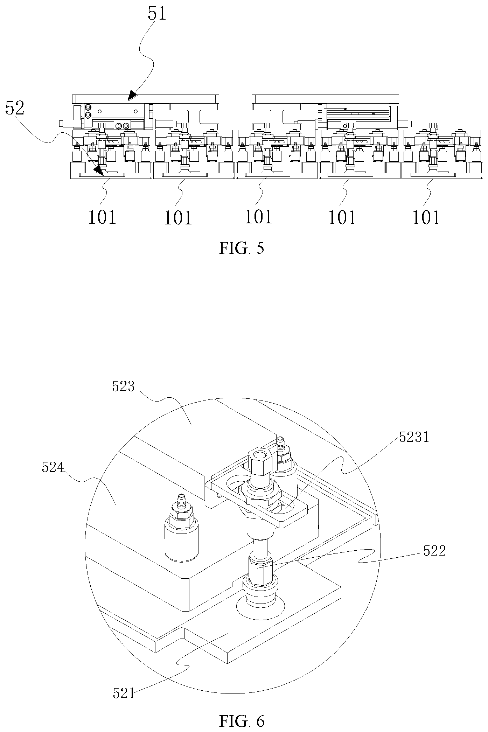

Referring to Figs. 4 and 5, in one embodiment, the first mechanical hand and the second mechanical hand each include a bracket 51 and m×n adsorption units 52 connected to the bracket 51, the adsorption units 52 being arranged at intervals of m rows and n columns, wherein m is a positive integer greater than or equal to 1, and n is a positive integer greater than or equal to 2. Specifically, the first mechanical hand and the second mechanical hand of the present embodiment have the same structure, and both include a bracket 51 and an adsorption unit 52. The bracket 51 on the one hand serves to connect a moving platform and on the other hand to support and connect multiple adsorption units 52. The adsorption unit 52 can generate a vacuum adsorption force to adsorb the pole pieces, the number of the adsorption unit 52 is the same as the number of the pole pieces, and the arrangement of the adsorption units 52 is the same as the arrangement of the pole pieces. In the present embodiment, the adsorption units 52 are arranged at intervals of m rows and n columns, and multiple adsorption units 52 are arranged at intervals transversely and longitudinally, wherein the number of adsorption units 52 is m×n, m is a positive integer greater than or equal to 1, and n is a positive integer greater than or equal to 2. For example, 10 adsorption units 52 are arranged at intervals of two rows and five columns. In this embodiment, multiple pole pieces on the correction platform are also placed in two rows and five columns spaced apart. In this manner, by arranging multiple adsorption units 52 laterally in parallel and spaced apart, the mechanical hand can simultaneously absorb multiple pole pieces laterally in parallel and spaced apart, thereby facilitating the simultaneous lateral in parallel and spaced apart placement of multiple pole pieces.

Referring to Fig. 6, in the present embodiment, the adsorption unit 52 includes a suction plate 521, a suction nozzle 522, a first connecting piece 523, and a second connecting piece 524. The first connecting piece 523 and the second connecting piece 524 are arranged in layers above and below and fixedly connected, the first connecting piece 523 being on an upper layer, the second connecting piece 524 being on a lower layer, and the first connecting piece 523 being used for connection with the bracket 51. The suction plate 521 is provided on the lower layer of the second connecting piece 524, and the suction plate 521 is connected to the first connecting piece 523 via a suction nozzle 522. Specifically, two waist-shaped connection holes 5231 are provided at two ends along the length direction of the first connecting piece 523, the waist-shaped connection holes 5231 extend along the length direction of the first connecting piece 523, the axial direction of the suction nozzle 522 is in the same direction as the axial direction of the waist-shaped connection holes 5231, that is to say, the suction nozzle 522 is vertically arranged with respect to the first connecting piece 523 and the second connecting piece 524, one ends of the two suction nozzles 522 are respectively connected to the two waist-shaped connection holes 5231, the other ends of the two suction nozzles 522 are both connected to the back side of the suction plate 521, the front side of the suction plate 521 is used for adsorbing the pole piece, and the surface of the front side of the suction plate 521 is a flat surface so as to ensure the stable adsorption of the pole piece. The suction plate 521 is generally rectangular, the margins of the two short edges of the suction plate 521 have outwardly protruding portions, and the suction nozzle 522 is connected to the protruding on the suction plate 521. The longitudinal position of the suction plate 521 can be adjusted by means of the waist-shaped connection hole 5231, thereby maintaining adaptation to the longitudinal position of the pole piece.

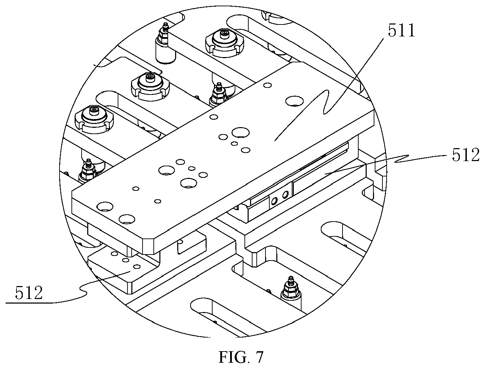

Referring to Fig. 7, multiple adsorption units 52 are arranged to be laterally spaced apart with fixed gaps, and the fixed gaps between the adsorption units 52 are the same as the fixed gaps arranged to be laterally spaced apart between the pole pieces. The plurality of adsorption units 52 are connected by brackets 51. The bracket is generally perpendicular with respect to the adsorption unit 52, and specifically, it is arranged along the width direction of the first connecting piece 523. The bracket 51 includes a third connecting piece 511 and a fourth connecting piece 512, wherein the third connecting piece 511 and the fourth connecting piece 512 are arranged in layers above and below, the third connecting piece 511 is on an upper layer, the fourth connecting piece 512 is on a lower layer, an upper side of the third connecting piece 511 is used for connecting a moving platform, and the fourth connecting piece 512 is connected with the adsorption unit 52. The moving platform is a mechanism for driving the mechanical hand to move, and has various structural forms, such as a two-axis moving platform, a three-axis moving platform, etc., and is not limited herein. The number of the third connecting pieces 511 may be one or more, and is not limited herein. The number of the fourth connecting piece 512 is the same as that of the adsorption unit 52, and the fourth connecting pieces 512 are connected to the upper side of the first connecting pieces 523 of the adsorption units 52. A lower layer of the third connecting piece 511 can be connected to one or more fourth connecting pieces 512, namely, it can support multiple adsorption units 52; the fourth connecting piece 512 and the third connecting piece 511 are fixedly connected or movably connected, for example, the fourth connecting piece 512 is a lockable sliding table; the fourth connecting piece 512 and the third connecting piece 511 are slidably connected; and the sliding direction of the fourth connecting piece 512 is along the width direction of the first connecting piece 523. In the present embodiment, two fourth connecting pieces 512 are connected to the lower layer of one third connecting piece 511, wherein one fourth connecting piece 512 is fixedly connected to the third connecting piece 511, and the other fourth connecting piece 512 is slidably connected to the third connecting piece 511. That is to say, the slidable fourth connecting piece 512 can slide laterally in a direction close to the fixed fourth connecting piece 512 so as to shorten the distance therebetween, or the slidable fourth connecting piece 512 can slide laterally in a direction away from the fixed fourth connecting piece 512 so as to increase the distance therebetween. Therefore, under the driving of the fourth connecting piece 512, the lateral fixed gap between adjacent adsorption units 52 can be adjustable, thereby maintaining adaptability to the lateral position of the pole piece.

It needs to be noted that the suction plate 521 of the present embodiment is provided with an inner cavity. During the absorption, the inner cavity of the suction plate 521 is in a vacuum state, and the suction plate 521 generates a vacuum absorption force, and the surface on the front side of the suction plate 521 is provided with multiple absorption holes, and the pole pieces are absorbed through the absorption holes. In other embodiments, the suction plates 521 of different absorption units 52 can be communicated with each other via a connecting pipe, and multiple suction plates 521 can generate absorption force at the same time or release absorption force at the same time when the vacuum is drawn, so that a mechanical hand can realize simultaneous absorption and simultaneous placement of multiple pole pieces, avoid offsets during the process of absorption and lifting and avoid offsets during the process of releasing the absorption force and falling, ensure the synchronization of the absorption and placement processes, and do not need to provide an air pump for each suction plate 521, thereby saving costs.

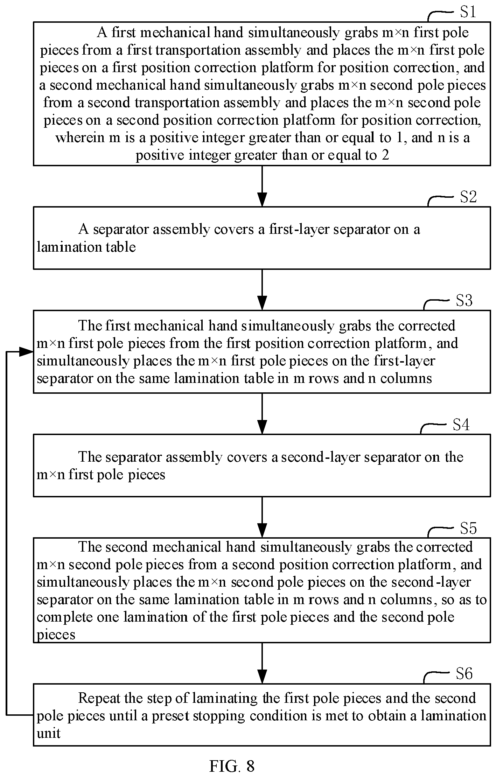

With reference to Fig. 8, an embodiment of the present invention also provides a method for stacking cell pole pieces. Fig. 8 is a schematic flowchart of the steps of a method for stacking cell pole pieces provided in an embodiment of the present invention. The method of this embodiment can be applied to the device for stacking cell pole pieces in the above embodiment. The method includes steps S1 to S6.

S1, a first mechanical hand simultaneously grabs m×n first pole pieces 101 from a first transportation assembly 11 and places the m×n first pole pieces 101 on a first position correction platform for position correction, and a second mechanical hand simultaneously grabs m×n second pole pieces 102 from a second transportation assembly 12 and places the m×n second pole pieces 102 on a second position correction platform for position correction, wherein m is a positive integer greater than or equal to 1, and n is a positive integer greater than or equal to 2;
Firstly, it needs to be noted that the pole pieces placed on the first transportation assembly 11 and the second transportation assembly 12 have been pre-processed. The pre-processing process includes: controlling tension and correcting an offset after unwinding the rolled incoming materials; die-cutting/cutting the incoming materials after the offset correction is completed into pole pieces; performing surface dust-brushing and size detection on the pole piece after die-cutting/cutting is completed; and performing NG elimination on the unqualified pole pieces in the size detection, and transferring the good pole pieces after NG elimination to the transportation assembly for caching.

In one embodiment, a first transportation assembly 11 is provided upstream of a first correction platform 21, the first transportation assembly 11 being responsible for transporting a first pole piece 101 to be by the side of the first correction platform 21 to facilitate the first mechanical hand transporting the first pole piece 101 between the first transportation assembly 11 and the first correction platform 21. Likewise, a second transportation assembly 12 is provided upstream of a second correction platform 22, the second transportation assembly 12 being responsible for transporting the second pole piece 102 to be by the side of the second correction platform 22 to facilitate the second mechanical hand transporting the second pole piece 102 between the second transportation assembly 12 and the second correction platform 22. The first transportation assembly 11 and the second transportation assembly 12 are both vacuum adsorption belts, the vacuum adsorption belts can generate a vacuum adsorption force, and multiple pole pieces are adsorbed and transported by the vacuum adsorption force generated by the vacuum adsorption belts. Multiple groups of adsorption holes arranged at intervals of m rows and n columns are provided on the vacuum adsorption belt, and each group of adsorption holes is used for adsorbing one pole piece. Therefore, m×n pole pieces can be arranged at intervals in m rows and n columns on the vacuum adsorption belt, and each pole piece is stably adsorbed by a corresponding adsorption hole, so as to ensure that the pole pieces do not offset during the transportation. It will of course be understood that other adsorbent structures are possible as long as they enable the pole pieces to be spaced in m rows and n columns and are thus not limited herein. Therefore, in the transportation step of the first transportation assembly 11, m×n first pole pieces 101 are arranged in m rows and n columns and are adsorbed on the first transportation assembly 11 and transported by the first transportation assembly 11 to be by the side of the first position correction platform. In the transportation step of the second transportation assembly 12, m×n second pole pieces 102 are arranged in m rows and n columns and are adsorbed on the second transportation assembly 12 and transported by the second transportation assembly 12 to be by the side of the second position correction platform. Since the first transportation assembly 11 and the second transportation assembly 12 have arranged the first pole pieces 101 and the second pole pieces 102 in m rows and n columns at the time of transporting, the first mechanical hand and the second mechanical hand can grab m×n first pole pieces 101 and m×n second pole pieces 102 arranged in m rows and n columns at one time when grabbing the first pole pieces 101 and the second pole pieces 102. By the same reasoning, when the first mechanical hand and the second mechanical hand respectively place the first pole pieces 101 and the second pole pieces 102 on the first correction platform 21 and the second correction platform 22, m×n first pole pieces 101 and m×n second pole pieces 102 which are arranged in m rows and n columns can also be placed at one time, which greatly improves the transportation efficiency. Moreover, since m×n pole pieces have been placed on the correction platform in m rows and n columns, the positions of the m×n pole pieces are approximately accurate. Even if the positions of the pole pieces are offset, only fine adjustment is required, which greatly improves the positioning efficiency.

In the present embodiment, the step S1 may specifically include steps S11 to S12: S11, performing visual positioning on the m×n first pole pieces 101 by a first CCD visual device and performing position correction based on the result of the visual positioning; and S12, performing visual positioning on the m×n second pole pieces 102 by a second CCD visual device and performing position correction based on the result of visual positioning.

Specifically, the first CCD visual device is arranged above the first correction platform 21, the first correction platform 21 includes m×n UVW platforms arranged in m rows and n columns, the first CCD visual device takes an image of the first pole pieces 101 on the m×n UVW platforms and performs visual analysis to obtain a visual analysis result of whether to correct and a correction numerical value, transmits the visual analysis result to the UVW platform corresponding to the first pole piece 101 needing to be corrected, and then the UVW platform performs correction according to the correction numerical value given by the visual analysis result. Finally, it is ensured that the first pole pieces 101 are arranged in m rows and n columns, and that a fixed gap is maintained between adjacent first pole pieces 101. By the same reasoning, the second CCD visual device is arranged above the second correction platform 22, the second correction platform 22 comprises m×n UVW platforms arranged in m rows and n columns, and the second CCD visual device takes an image of the second pole pieces 102 on the m×n UVW platforms and performs visual analysis to obtain a visual analysis result of whether to correct and a correction numerical value, transmits the visual analysis result to the UVW platform corresponding to the second pole piece 102 needing to be corrected, and then the UVW platform performs correction according to the correction numerical value given by the visual analysis result. Finally, it is ensured that the second pole pieces 102 are arranged in m rows and n columns, and that a fixed gap is maintained between adjacent second pole pieces 102.

It needs to be noted that the UVW platform can correct not only the position of the pole piece but also the orientation of the tab when the pole piece is placed. Different types of lithium batteries have different positions of the tabs. Therefore, when performing visual analysis, the CCD visual device further analyzes the orientation of the tab of the pole piece, and when the orientation of the tab is in a wrong position, a position correction is performed by the UVW platform to ensure that the position of the tab is accurate.

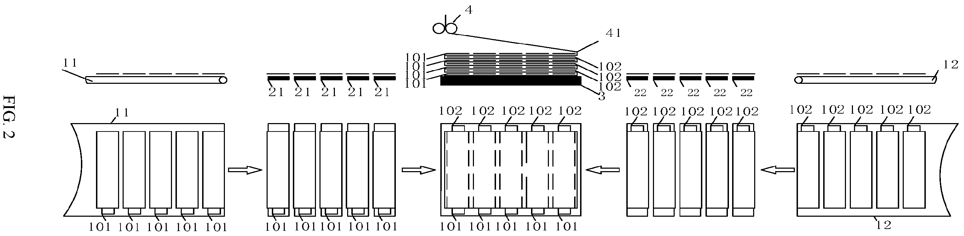

Referring to Fig. 2, in one embodiment, the tabs of the first pole pieces 101 are each placed in a first direction and the tabs of the second pole pieces 102 are each placed in a second direction, wherein the first direction is opposite to the second direction. Specifically, the positive tab and negative tab of this type of lithium battery are positioned on either side of the pole piece, so that the tab of the first pole piece 101 and the tab of the second pole piece 102 are oppositely oriented. If the tab of the first pole piece 101 or the tab of the second pole piece 102 is orienting in the same direction, then the wrongly oriented pole piece is rotated 180° by the UVW platform to ensure that the tabs of the two are oriented in opposite directions.

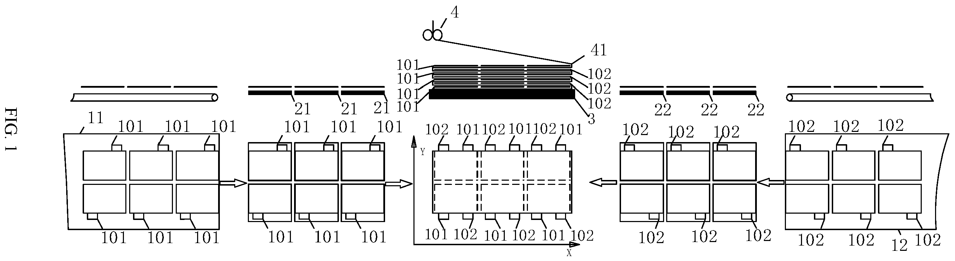

Referring to Fig. 1, in another embodiment, the tabs of the first pole pieces 101 of an m^{th} row and the tabs of the second pole pieces 102 of the m^{th} row are in a first direction, and the tabs of the first pole pieces 101 of an (m+1)^{th} row and the tabs of the second pole pieces 102 of the (m+1)^{th} row are in a second direction, wherein the first direction is opposite to the second direction. Specifically, both the positive tab and negative tab of such a lithium battery are positioned on the same side of the pole piece, so that the orientations of the tab of the first pole piece 101 and the tab of the second pole piece 102 are the same. In a case where the tabs of the first pole piece 101 or the second pole piece 102 are oriented in different directions, the wrongly oriented pole piece is rotated 180° by the UVW platform to ensure that the tabs of the two are oriented the same. However, when there are m rows of the first pole piece 101 and the second pole piece 102, the tabs of the first pole piece 101 and the second pole piece 102 of the m^{th} row are oppositely oriented to the tabs of the first pole piece 101 and the second pole piece 102 of the (m+1)^{th} row. By way of example, the first tab and the second tab of the first row orient upwards, and the first tab and the second tab of the second row are required to orient downwards, so that the tabs of the first row of pole pieces and the tabs of the second row of pole pieces orient opposite to each other, leaving a space between the lower edge of the first row of pole pieces and the upper edge of the second row of pole pieces. At that, no tab is cut when the slitting device cuts, thereby avoiding the interference of the tab on the cutting and ensuring the reliability of the cut cell.

Further, step S11 may specifically include steps S111 to S114: S111, photographing the m×n first pole pieces 101 by the first CCD visual device to obtain a first image; S112, performing visual positioning on the first image to obtain the coordinates of each first pole piece 101; S113, determining whether the first pole piece 101 is at a correct position according to the coordinates of each first pole piece 101 and reference positioning coordinates corresponding to the first pole piece 101; and S114, if the first pole piece 101 is not in the correct position, performing position correction on the first pole piece 101. Specifically, first, the first CCD visual device photographs a first image, wherein the first image includes each of the first pole pieces 101, and the coordinates Dₘₙ(*x,y,z*) of each of the first pole pieces 101 are acquired by means of image segmentation or feature extraction, where m and n represent the numbers of the row and the column of the pole piece, x represents the abscissa, y represents the ordinate, and z represents the vertical coordinate, and all the first pole pieces 101 can share one coordinate system or can establish an independent coordinate system for each of the first pole pieces 101. After the coordinates of each of the first pole pieces 101 are obtained, the coordinates of each of the first pole pieces 101 is compared with the reference positioning coordinates D_{m,n}(*x'*,*y'*,*z'*) corresponding to the first pole piece 101. It is determined whether the position of the first pole piece 101 is correct, and if so, no correction is required, and if not, correction is performed.

The process of correction is specifically: firstly, obtaining a correction numerical value according to the calculation of the difference value between D_{m,n}(*x*,*y*,*z*) and D_{m,n}(*x',y',z'*)*,* sending the correction numerical value to the UVW platform, then the UVW platform performing position correction on the first pole piece 101 according to the correction numerical value, and finally making the first pole piece 101 be in the correct position. Illustratively, for example, the correction numerical values are x-x'=-1.5, y-y'=1.5, and z-z'=0, and the position of the first pole piece 101 is adjusted by the UVW platform so that x-x'=0, y-y'=0, and z-z'=0.

Further, step S113 may specifically include steps S1131 to S1134: S1131, determining whether the coordinates of the first pole piece 101 and the reference positioning coordinates corresponding to the first pole piece 101 are within a preset error range; S1132, determining whether a left-right spacing distance between two left-right adjacent first pole pieces 101 is within a preset left-right spacing distance range; S1133, determining whether an upper-lower spacing distance of two upper-lower adjacent first pole pieces 101 is within a preset upper-lower spacing distance range; and S1134, when the difference value between the coordinates of the first pole piece 101 and the reference positioning coordinates corresponding to the first pole piece 101 is within a preset error range, the left-right spacing distance of two left-right adjacent first pole pieces 101 is within a preset left-right spacing distance range, and the upper-lower spacing distance of two upper-lower adjacent first pole pieces 101 is within a preset upper-lower spacing distance range, determining that the first pole piece 101 is in a correct position.

Specifically, in the present embodiment, three conditions need to be provided for determining whether the first pole piece 101 is at the correct position. Namely, whether the coordinates of the first pole piece 101 and the reference positioning coordinates corresponding to the first pole piece 101 are within a preset error range, whether the left-right spacing distance of two left-right adjacent first pole pieces 101 is within a preset left-right spacing distance range, and whether the upper-lower spacing distance of two upper-lower adjacent first pole pieces 101 is within a preset upper-lower spacing distance range, and when the three conditions are satisfied at the same time, then it can be determined that the first pole piece 101 is at the correct position.

Specifically, the determination of the first condition, i.e., the reference determination, is first performed, and the subsequent determinations are performed only when the reference determination satisfies the requirements. If the reference determination does not satisfy the requirements, the correction step is performed, and the determination of the remaining two conditions doesn't need to be performed anymore, saving calculation resources. The reference determination is also to calculate the difference value between D_{m,n}(*x,y,z*) and D_{m,n}(*x',y'z*'). It is determined whether the difference value is within a preset error range, and if so, it is considered that the condition is satisfied, and if not, the condition is not satisfied. The preset error range is set in advance, for example, (x-x'<±0.5, y-y' <±0.5, z-z'=0). But it could be understood that other numerical values are also possible and are not limited herein. In a specific execution: acquiring geometric center coordinates of the first pole piece 101, and acquiring reference positioning coordinates corresponding to the geometric center coordinates; calculating a difference value between the geometric center coordinates and the reference positioning coordinates corresponding thereto; and when the difference value is within a preset error range, determining that the difference value between the coordinates of the first pole piece 101 and the reference positioning coordinates corresponding to the first pole piece 101 is within the preset error range. By selecting the geometric center coordinates corresponding to the geometric center of the first pole piece 101 to calculate the difference value, only one set of coordinates needs to be selected to be calculated. There is no need to calculate the difference value of multiple sets of coordinates, saving calculation resources and improving correction efficiency.

Then, determination of the second condition, namely, determination of the left-right spacing, and determination of whether a gap between two left-right adjacent first pole pieces 101 is within a preset left-right spacing distance range, is performed. In a specific execution: acquiring lower right corner coordinates of a target first pole piece 101, and acquiring lower left corner coordinates of the first pole piece 101 positioned on the right side of the target first pole piece 101; calculating a left-right spacing distance between the lower right corner coordinates and the lower left corner coordinates; and if the left-right spacing distance is within a preset left-right spacing distance range, determining that the left-right spacing distance of two left-right adjacent first pole pieces 101 is within the preset left-right spacing distance range. Specifically, the target first pole piece 101 is the first pole piece 101 on the left side of the two left-right adjacent first pole pieces 101, and the first pole piece 101 on the left side is selected as the target pole piece. Then the following is performed: acquiring the lower right corner coordinates D_{m,n}*(x_{lower right corner}, y_{lower right corner}, z_{lower right corner}*) of the left-side first pole piece 101 and the lower left corner coordinates D_{m,n+1}(*x_{lower left corner}, y_{lower left corner}, z_{lower left corner}*) of the right-side first pole piece 101, calculating the left-right spacing distance between the two, namely, calculating *x_{lower left corner}* - *x_{lower right corner},* and determining whether the left-right spacing distance is within a preset left-right spacing distance range, wherein the preset left-right spacing distance range may be |4| < *x_{lower left corner}* - *x_{lower right corner}* < |5|, and it can be understood that other numerical values may also be possible, which are not limited herein. Since the lower right corner coordinates are on the right side edge of the left-side first pole piece 101, and the lower left corner coordinates are on the left side edge of the right-side first pole piece 101, the difference value between the abscissas of the lower right corner coordinates and the lower left corner coordinates can represent the left-right spacing distance between two first pole pieces 101. Therefore, the calculation is performed by selecting the coordinates of the lower left corner and the lower right corner of two adjacent first pole pieces 101, and each first pole piece 101 only needs to select one set of coordinates for calculation, without calculating the difference values of multiple sets of coordinates, thereby saving calculation resources and improving correction efficiency. It of course could be understood that in other embodiments, other coordinates on the right side edge of the left-side first pole piece 101 may be selected, and other coordinates on the left side edge of the right-side first pole piece 101 may be selected for calculation to confirm the left-right spacing distance.

Finally, determination of the third condition, namely, determination of the upper-lower spacing, and determination of whether the gap between the upper and lower two adjacent first pole pieces 101 is within a preset upper-lower spacing distance range, is performed. In a specific execution, the following is performed: acquiring lower right corner coordinates of a target first pole piece 101, and acquiring upper right corner coordinates of the first pole piece 101 positioned on the lower side of the target first pole piece 101; calculating the upper-lower spacing distance between the lower right corner coordinates and the upper right corner coordinates; and if the upper-lower spacing distance is within a preset upper-lower spacing distance range, determining that the upper-lower spacing distance of two upper and lower adjacent first pole pieces 101 is within the preset upper-lower spacing distance range. Specifically, the target first pole piece 101 is the first pole piece 101 on the upper side of the upper-lower two adjacent first pole pieces 101, and the first pole piece 101 on the upper side is selected as the target pole piece. Then the following is performed: acquiring the lower right corner coordinates _{Dm,n}(*x_{lower right corner}, y_{lower right corner}, z_{lower right corner}*) of the upper-side first pole piece 101 and the upper right corner coordinates D_{m+1,n}(*x_{upper right corner}, y_{upper right corner}, z_{upper right corner}*) of the lower-side first pole piece 101, calculating the upper-lower spacing distance between the two, namely, calculating *y_{lower right corner}* - *y_{upper right corner}*, and determining whether the upper-lower spacing distance is within a preset upper-lower spacing distance range, wherein the preset upper-lower spacing distance range may be |4| < *y_{lower right corner}* - *y_{upper right corner}* < |5| and it of course can be understood that other numerical values can also be possible, which are not limited herein. Since the lower right corner coordinates are positioned on the lower side edge of the upper-side first pole piece 101, and the upper right corner coordinates are positioned on the upper side edge of the lower-side first pole piece 101, the difference value between the vertical coordinates of the lower right corner coordinates and the upper right corner coordinates can represent the upper-lower spacing distance between two first pole pieces 101. Therefore, the calculation is performed by selecting the coordinates of the upper right corner and the lower right corner of two adjacent first pole pieces 101, and each first pole piece 101 only needs to select one set of coordinates for calculation, without calculating the difference values of multiple sets of coordinates, thereby saving calculation resources and improving correction efficiency. It of course could be understood that in other embodiments, other coordinates on the lower side edge of the upper-side first pole piece 101 may be selected, and other coordinates on the upper side edge of the lower-side first pole piece 101 may be selected for calculation to confirm the upper-lower spacing distance.

It further needs to be noted that in a scene where m is two or more rows, the lower right corner coordinates of the target first pole piece 101 of the first row, namely, the lower right corner coordinates of the upper-side first pole piece 101, have been acquired in the process of performing left-right spacing determination, namely, the lower right corner coordinates of the upper-side first pole piece 101 acquired in condition three are the lower right corner coordinates of the left-side first pole piece 101 acquired in condition two. That is to say, the coordinates of the lower right corner of the target first pole piece 101 acquired in the left-right spacing determination and the upper-lower spacing determination are the same, both being D_{m,n}(*x_{lower right corner}, y_{lower right corner}, z_{lower right corner}*); and thus, it is not necessary to acquire the coordinates again in the upper-lower spacing determination, and the same coordinates can be used for calculation, saving calculation resources and improving correction efficiency.

By determination of the three conditions, it is ensured that the first pole piece 101 is in the correct position and has a fixed gap on the upper, lower, left, and right, and it is ensured that a cutting space is left for the slitting device.

By the same reasoning, the principle of the correction steps of the second pole piece 102 is the same as the principle of the correction steps of the first pole piece 101, namely, the process of step S12 is the same as that of step S11. For the sake of simplicity of the description, the principle and process of step S12 will not be repeated here.

S2, a separator assembly 4 covers a first-layer separator 41 on a lamination table 3.

In this embodiment, the separator assembly 4 first covers the lamination table 3 with the first-layer separator 41. The first-layer separator 41 is positioned above the lamination table 3, and then lamination is started from the first-layer separator 41.

S3, the first mechanical hand simultaneously grabs the corrected m×n first pole pieces 101 from the first position correction platform, and simultaneously places m×n first pole pieces 101 on the first-layer separator 41 on the same lamination table 3 in m rows and n columns.

In the present embodiment, after the first-layer separator 41 is covered over the lamination table 3, the first mechanical hand moves to the first correction platform 21 and simultaneously grabs the corrected m×n first pole pieces 101 arranged in m rows and n columns, and then carries them to the lamination table 3. The first mechanical hand grabs and places the first pole piece 101 in an absorption manner. During the transfer, the first pole pieces 101 are also absorbed by the absorption unit 52 of the first mechanical hand in an arrangement of m rows and n columns, always maintaining the arrangement of m rows and n columns, and then the first mechanical hand moves above the lamination table 3 to release the absorption force while placing the first pole pieces 101 in m rows and n columns on the first-layer separator 41 on the lamination table 3. In this manner, the simultaneous placement of multiple first pole pieces 101 on the same lamination table 3 greatly increases the efficiency of lamination relative to existing lamination machines that place only one pole piece onto the lamination table 3 at a time.

S4, the separator assembly 4 covers a second-layer separator 41 on the m×n first pole pieces 101.

In the present embodiment, after the first pole piece 101 is stacked on the first-layer separator 41, the separator assembly 4 performs covering with the second-layer separator 41; the second-layer separator 41 is covered over the first pole piece 101, and the second-layer separator 41 covers the m×n first pole pieces 101 at a time, and then the second pole piece 102 is stacked on the second-layer separator 41; and the second-layer separator 41 separates and insulates the first pole pieces 101 from the second pole pieces 102. Therefore, the present embodiment improves the separator covering efficiency by using a separator covering process in which the separator 41 covers multiple pole pieces at once.

S5, the second mechanical hand simultaneously grabs the corrected m×n second pole pieces 102 from the second position correction platform, and simultaneously places the m×n second pole pieces 102 on the second-layer separator 41 on the same lamination table 3 in m rows and n columns, so as to complete one lamination of the first pole pieces 101 and the second pole pieces 102.

In the present embodiment, after the second-layer separator 41 is covered over the lamination table 3, the second mechanical hand moves to the second correction platform 22 and simultaneously grabs the corrected m×n second pole pieces 102 arranged in m rows and n columns, and then carries them to the lamination table 3. The second mechanical hand grabs and places the second pole pieces 102 in an absorption manner. During the transfer, the second pole pieces 102 are also absorbed by the absorption unit 52 of the second mechanical hand in an arrangement of m rows and n columns, maintaining the arrangement of m rows and n columns, and then the second mechanical hand moves above the lamination table 3 to release the absorption force while placing the second pole pieces 102 in m rows and n columns on the second-layer separator 41 on the lamination table 3. In this manner, the simultaneous placement of multiple second pole pieces 102 on the same lamination table 3 greatly increases the efficiency of lamination relative to existing lamination machines that place only one pole piece onto the lamination table 3 at a time. One of the first pole piece 101 and the second pole piece 102 is a positive pole piece and the other is a negative pole piece. The positive pole piece may be stacked first or the negative pole piece may be stacked first, which is not limited herein. After being stacked, the first pole piece 101 and the second pole piece 102 above and below the separator 41 are overlapped to complete one lamination.

As shown in Fig. 2, illustratively, the m rows and n columns may be one row and five columns, i.e., five cell bodies 310 are spaced laterally in parallel.

As shown in Fig. 1, for example, the m rows and n columns may be two rows and three columns. That is, the arrangement is divided into two rows, with three pole pieces placed in parallel at intervals per row, and a total of six pole pieces are placed.

S6, repeating the step of laminating the first pole piece 101 and the second pole piece 102 until a preset stopping condition is reached to obtain a lamination unit.

In the present embodiment, after the second pole pieces 102 are stacked on the second-layer separator 41, the separator assembly 4 performs covering with the third-layer separator 41, the third-layer separator 41 is covered over the second pole piece 102, and the third-layer separator 41 covers m×n second pole pieces 102 at a time, and then the first pole piece 101 is stacked on the third-layer separator 41, namely, the steps of S3 to S5 are performed repeatedly. Namely, the separator 41 is folded into a Z shape by the reciprocating movement of the separator assembly 4, and at the same time, a first mechanical hand and a second mechanical hand are used to alternately place the first pole pieces 101 and the second pole pieces 102 between the folded separator 41; and the separator 41 separates the first pole pieces 101 from the second pole pieces 102, the above-mentioned process is repeated multiple times until a preset stopping condition is reached, and a lamination unit is finally obtained. The preset stopping condition may be that the number of layers of the separator 41 reaches a target number of layers, or that the number of times of lamination reaches a target number of times, or that the time of stacking reaches a target time, or that the thickness of stacking reaches a target thickness, which is not limited herein. The lamination unit is composed of multiple lamination bodies, and the lamination unit of this embodiment is composed of m×n lamination bodies. The entire lamination unit is integrally laid off after the lamination unit is obtained, so that multiple lamination bodies can be laid off at the same time, thereby improving the laying-off efficiency and reducing the laying-off cost.

With respect to the existing method of stacking previously die-cut positive pole pieces and negative pole pieces and a separator 41 one by one from bottom to top, by the method for stacking cell pole pieces of the present embodiment, it is possible to place multiple pole pieces in parallel at the same time or to place multiple pole pieces transversely and longitudinally at the same time on the same lamination table 3 for lamination at a high speed, thereby greatly improving lamination efficiency.

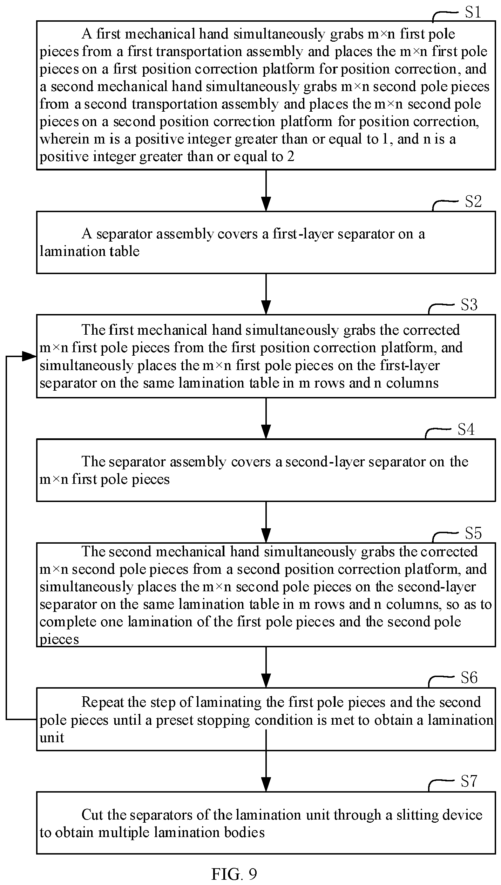

In another embodiment, as shown in Fig. 9, the method for stacking cell pole pieces includes steps S1 to S6, and after step S6, further including step S7: the separator 41 of the lamination unit is cut by a slitting device to obtain multiple lamination bodies. Specifically, the slitting device performs dividing according to a slitting line, which comprises a longitudinal slitting line and a lateral slitting line respectively arranged in the longitudinal direction and in the lateral direction of the lamination unit. Specifically, the longitudinal slitting line is provided between two adjacent left and right pole pieces, and the lateral slitting line is provided between two adjacent upper and lower pole pieces. The slitting device performs cutting along the longitudinal slitting line and lateral slitting line to finally obtain m×n lamination bodies, and the lamination bodies are packaged to obtain cells. In this way, it is possible to simultaneously manufacture multiple cells by stacking multiple pole pieces in a lateral and longitudinal direction at one time and performing die cutting using a slitting device to obtain multiple lamination bodies, thereby greatly improving the productivity of cells.

In other embodiments, the number of lamination tables 3 is not limited to one, but may be any natural number of lamination tables 3 greater than one. For example, two lamination tables 3, respectively a first lamination table and a second lamination table, can perform stacking simultaneously. Specifically, the overall steps are similar to S1 to S6, except for the steps of transfer with two mechanical hands. Specifically, at the moment when the first mechanical hand is transferring the first pole pieces 101 to the first lamination table, the second mechanical hand is transferring the second pole piece 102 to the second lamination table. Similarly, at the moment when the first mechanical hand is transferring the first pole pieces 101 to the second lamination table, the second mechanical hand is transferring the second pole pieces 102 to the first lamination table. Therefore, at any one moment, both mechanical hands are in operating states and will not stop and wait. If there is only one lamination table 3, when the first mechanical hand is placing the first lamination, the second mechanical hand is in a waiting state, or when the second mechanical hand is placing a second lamination, the first mechanical hand is in a waiting state. However, using the above-mentioned two mechanical hands to respectively stack the pole pieces onto the two lamination tables 3 at the same time can make the two mechanical hands not stop, reduce the waiting time for a stop, and further improve the lamination speed and lamination efficiency. Furthermore, in this embodiment, the two lamination tables 3 are both arranged between the first correction platform 21 and the second correction platform 22, and the two lamination tables 3 are arranged at an upper-lower spacing at an angle of looking down, and thus the two lamination tables 3 are not on the same straight line with the first correction platform 21 and the second correction platform 22, but are offset by a certain distance. Then, the moving platform corresponding to the two mechanical hands can be set as a horizontally rotating mechanism. After the correction platform grabs the pole pieces, the moving platform is horizontally rotated to the lamination table 3 to place the pole pieces, and the pole pieces are carried by means of horizontal rotation, so as to reduce the moving stroke and improve the efficiency of carrying.

## Claims

1. A method for stacking cell pole pieces, **characterized by** comprising:
a first mechanical hand simultaneously grabbing m×n first pole pieces from a first transportation assembly and placing the m×n first pole pieces on a first position correction platform for position correction, and a second mechanical hand simultaneously grabbing m×n second pole pieces from a second transportation assembly and placing the m×n second pole pieces on a second position correction platform for position correction, wherein m is a positive integer greater than or equal to 1, and n is a positive integer greater than or equal to 2;
a separator assembly covering a first-layer separator on a lamination table;
the first mechanical hand simultaneously grabbing the corrected m×n first pole pieces from the first position correction platform, and simultaneously placing the m×n first pole pieces on the first-layer separator on the same lamination table in m rows and n columns;
the separator assembly covering a second-layer separator on the m×n first pole pieces;
the second mechanical hand simultaneously grabbing the corrected m×n second pole pieces from the second position correction platform, and simultaneously placing the m×n second pole pieces on the second-layer separator on the same lamination table in m rows and n columns, so as to complete one lamination of the first pole pieces and the second pole pieces; and
repeating the step of laminating the first pole pieces and the second pole pieces until a preset stopping condition is met to obtain a lamination unit.

2. The method according to claim 1, **characterized in that** the step of position correction comprises:
performing visual positioning on m×n first pole pieces by a first CCD visual device and performing position correction based on a result of the visual positioning; and
performing visual positioning on m×n second pole pieces by a second CCD visual device and performing position correction based on a result of the visual positioning.

3. The method according to claim 1, **characterized in that** tabs of the first pole pieces are each placed in a first direction and tabs of the second pole pieces are each placed in a second direction, wherein the first direction is opposite to the second direction; or
the tabs of the first pole pieces of an m^{th} row and the tabs of the second pole pieces of the m^{th} row are in the first direction, and the tabs of the first pole pieces of an (m+1)^{th} row and the tabs of the second pole pieces of the (m+1)^{th} row are in the second direction, wherein the first direction is opposite to the second direction.

4. The method according to claim 1, **characterized in that** the first mechanical hand and the second mechanical hand grab and place the first pole piece and the second pole piece in an absorption manner.

5. The method according to claim 1, **characterized by** further comprising:
arranging and absorbing m×n first pole pieces in m rows and n columns on the first transportation assembly and transporting the m×n first pole pieces by the first transportation assembly to be by a side of the first position correction platform; and
arranging and absorbing m×n second pole pieces in m rows and n columns on the second transportation assembly and transporting the m×n second pole pieces by the second transportation assembly to be by a side of the second position correction platform.

6. The method according to claim 1, **characterized by** further comprising:
cutting the separator of the lamination unit through a slitting device to obtain multiple lamination bodies.

7. A device for stacking cell pole pieces, **characterized by** being applied to the method according to any one of claims 1 to 6, wherein the device comprises: a first transportation assembly for transporting a first pole piece and a second transportation assembly for transporting a second pole piece, a first correction platform for correcting a position of the first pole piece, a second correction platform for correcting a position of the second pole piece, a lamination table, a first mechanical hand, a second mechanical hand, and a separator assembly for separator covering, wherein the first correction platform and the second correction platform are respectively provided on two sides of the lamination table, the first transportation assembly is provided on a side of the first correction platform away from the lamination table, and the second transportation assembly is provided on a side of the second correction platform away from the lamination table; and the first mechanical hand is used for simultaneously grabbing and placing multiple first pole pieces and reciprocating among the first transportation assembly, the first correction platform, and the lamination table to transfer the first pole pieces, and the second mechanical hand is used for simultaneously grabbing and placing multiple second pole pieces and reciprocating among the second transportation assembly, the second correction platform, and the lamination table to transfer the second pole pieces.

8. The device for stacking cell pole pieces according to claim 7, **characterized in that** a first CCD visual device is provided above the first correction platform and a second CCD visual device is provided above the second correction platform.

9. The device for stacking cell pole pieces according to claim 7, **characterized in that** the first mechanical hand and the second mechanical hand each comprise a bracket and n adsorption units connected to the bracket, n adsorption units being laterally arranged in parallel and spaced apart, wherein n is a positive integer greater than or equal to 2.

10. The device for stacking cell pole pieces according to claim 7, **characterized in that** the first mechanical hand and the second mechanical hand each comprise a bracket and m×n adsorption units connected to the bracket, the adsorption units being arranged in m rows and n columns and spaced apart, wherein m is a positive integer greater than or equal to 1, and n is a positive integer greater than or equal to 2.
